# EUROPEAN PATENT SPECIFICATION

(11) **EP 0 866 837 B1**
(45) Date of publication and mention of the grant of the patent: **05.04.2000**
(21) Application number: 96944336.5
(22) Date of filing: 12.12.1996
(51) Int. Cl.: C08L 95/00, E01C 7/26, E01C 19/17

(54) **RUBBER BASE ASPHALT EMULSION ADDITIVE AND METHOD**
ADDITIV AUF GUMMIBASIS FÜR ASPHALTEMULSION
ADDITIF POUR EMULSION DE BITUME A BASE DE CAOUTCHOUC ET PROCEDE ASSOCIE

(30) Priority: 12.12.1995 US 570739
(43) Date of publication of application: 30.09.1998
(73) Proprietor: Rubber Resources, L.L.C., Houston, TX 77025 (US)
(72) Inventor: JIMENEZ, Enrique, deceased (US)
(74) Representative: Hoarton, Lloyd Douglas Charles
(86) International application number: PCT/US96/19807
(87) International publication number: WO 97/21769

(56) References cited:
- EP-A- 0 604 258
- FR-A- 2 581 392
- US-A- 3 338 849
- US-A- 4 018 730

## Description

The present invention relates to asphalt roadway paving materials and a method of adding an emulsion including rubber to asphalt paving material.

Adding rubber to asphalt paving was first proposed in the middle of the last century. However, not until the present century was the idea of adding vehicle tire rubber to asphalt developed and crumb rubber from vehicle tires was added. Crumb rubber in an asphalt emulsion proved to be elastic and flexible and is used as a crack sealer with satisfactory results.

The problem of scrap tires in the environment is well known. In the United States alone, 282 million tires are discarded every year. Although used in various ways, a stockpile of 1-2 billion scrap tires remains. Many are burned as fuel in cement production and some are used as land fill, but the number of scrap tires continues to increase.

Scrap rubber, crumb rubber, and reclaimed rubber are all terms that are used to describe rubber recycled from other uses, principally car tires. Such rubber is a blend, not a pure polymer. Most of the tires manufactured in the United States are mainly composed of styrene-butadiene rubber (SBR) or polyisoprene and carbon black.

However, with the availability of synthetic polymers of known composition and performance, and moderate cost, there seems to be no particular economic benefit in using scrap rubber. It may be made from recycled tires but the processing cost is substantial, so the final consumer cost is comparable to synthetics in most instances.

Scrap rubber has been used in road applications since the 1950's in Australia in sealing applications, as well as in crack sealing and joint filling. In other countries, used tires are actually imported as fuel and for other purposes, in Europe, used tires are an export to countries in the third world and South America. No particular impetus for paving appears to exist.

Nevertheless, tire rubber especially as crumb rubber has a valuable polymer component that might be expected to improve properties such as cohesion, elasticity, tensile strength and deformation resistance of compounds to which it is added. For instance, it has been found that, when added to asphalt, crumb rubber from scrap vehicle tires improves road durability. Crumb rubber recovered from tires has been successfully used for many years in road applications as inter-layers, membrane seals and in hot mix. The increase in viscosity, elasticity and cohesion of the binders and mixes resulting have been shown to increase rut resistance, fatigue life, crack resistance and stone retention. The decrease in thermal susceptibility makes crumb rubber modified asphalt a positive choice for such applications.

Most asphalt is the product of the distillation of crude petroleum. Bulk properties of asphalt range from hard and brittle-like solids to almost water-thin liquids. Asphalt cement is the basis of these products and may be liquefied for construction purposes by heating, adding solvents, or an emulsifier. Adding diesel fuel to base asphalt results in a product called "cut-back". The use of emulsions rather than cut-backs results in substantial fuel savings. In the general method for emulsifying asphalt, concurrent streams of molten asphalt cement and water containing an emulsifying agent are directed by a positive displacement pump into a colloid mill and divided into tiny droplets by intense shear stress.

The emulsifier disperses asphalt cement in water for pumping, prolonged storage and mixing. The emulsion should "break" quickly when it comes in contact with aggregate in a mixer or sprayed on a roadbed. To accomplish its function of cementing and waterproofing, the asphalt must separate from the water phase. In "breaking" from the water, asphalt droplets coalesce and produce a continuous film of asphalt on the aggregate or pavement. When cured, the residual asphalt retains all the adhesive, durability, and water-resistant properties of the asphalt cement from which it was produced.

Although the application of crumb rubber in emulsions has been somewhat limited, this limitation does not result from the difficulty of emulsifying rubber. The limitation is instead a reflection of the other components in crumb rubber and the crosslinked nature of the product, which have meant that even the best wet process blends are distinctly two phase.

Polymer emulsions have been used in chip sealing and slurry/micro-surfacing. The polymers generally are pre-blended with the asphalt, co-milled as latex or added post-mix as latex. These methods are not available for use with crumb rubber.

Pre-blended crumb, if completely digested might be able to be emulsified but crumb rubber systems in asphalt are generally two phase and additives such as carbon black are not readily emulsifiable. The methods by which the material may be incorporated in emulsion are thus largely confined to pre-milling addition.

Ground solid crumb rubber can be added into slurry mixes as a dry ingredient. In such a case the rubber becomes a part of the aggregate phase and acts mainly as a filler. The abrasion resistance of the rubber gives even a thin coating a reasonable wearing life, especially if modified with another polymer such as SBR latex. However, to change the elasticity and other desirable properties, the crumb rubber needs to be fully digested so that it coats the particles.

This is the basis of the process in the instant invention. The invention has applications in chipseals, slurries, micro-surfacing, roofing, pipe coating, soil stabilization, and in any other application in which emulsions are used. With the system of the present invention, thick conventional slurries are made and conventional chip seals are improved. The present invention provides a rubber containing emulsion which is easily added to substantially any conventional asphalt emulsion post-mix. The invention promotes increased cohesion in emulsified mixtures. The increase in cohesion improves properties such as deformation resistance (in rut filling), surface abrasion resistance, and crack resistance, and allows the use of increased binder films without flushing. In seals, stone retention should be improved, as well as crack resistance.

Two pertinent patents are U.S. Patent Nos. 4,018,730, Method for Emulsifying Asphalt-Rubber Paving Material and a Stable Thixotropic Emulsion of Said Material, and 4,137,204, Cationic Method for Emulsifying Asphalt-Rubber Paving Material and a Stable Thixotropic Emulsion of Said Material. No. 4,018,730 discloses a method requiring heat for emulsifying an asphalt and reclaimed rubber pavement repair material into a stable thixotropic emulsion which flows as a liquid upon gentle agitation and gains viscosity when left to settle. No. 4,137,204 discloses substantially the same emulsion as a base and an asphalt-rubber soap containing a cationic water soluble emulsifier. The present invention is different from these patents by forming an asphalt paving material emulsion, mixed under ambient temperature and containing a relatively high percentage of reclaimed rubber, that is added to and mixed with substantially any known asphalt paving material mix containing less than a predetermined required percentage of rubber for increasing the rubber content thereof at ambient temperature.

In one embodiment, the emulsion of the present invention contains equal parts by weight of rubber and solvent forming a base total for calculating the quantities of water, nonionic emulsifier, binders, anti-stripping agent, and color. The additive optionally includes latex or other natural and/or synthetic rubbers. All ingredients are mixed at ambient temperature before adding and commingling the crumb rubber with the emulsion.

The principal object of this invention is to provide an emulsion containing a relatively high percentage of rubber which is added to substantially any asphalt emulsion under ambient temperature or up to 150°F (66°C) to increase the rubber content to a predetermined percentage thereby providing physical properties that enhance flow and distribution, improve rheological values, enhance the emulsion's characteristics, and provide cross-linking to enable applications in paving, wall coating, roofing, soil retention and sod preservation.

This crumb rubber asphalt modifying emulsion consists of a semi-swelled dispersion of crumb rubber (40-50%) in a light aliphatic petroleum solvent. It is supplied as a free running high viscosity material that is readily poured and pumped.

The instant invention is used by post-mix addition into any of several asphalt emulsions with simple mixing. Tests of several such formulations developed the following data:

| Emulsion Type | % Additive | Viscosity | Settlement (one day) | Residue | Break (AS1160) |
|---|---|---|---|---|---|
| CRS-2 | 5 | 120 | 3 | 67 | <3 min |
| CRS-2 | 10 | 160 | 5 | 68 | <3 min |
| CRS-2 | 20 | 210 | 10 | 69 | <3 min |
| PMCRS-2 | 10 | 170 | 6 | 69 | n/a |
| CQS-1h | 10 | 39 | 7 | 60 | n/a |
| LMCQS-1h | 10 | 65 | 9 | 61 | n/a |
| Micro | 10 | 70 | 7 | 61 | n/a |

The particular additive was prepared as set out below. These results are expected since the emulsion is a separate phase and indicate that the emulsion must be thoroughly mixed before use. The increase in viscosity is believed to be attributable to initial swelling of asphalt particles by solvent. There was no obvious breaking caused by the addition of the emsulsion in concentrations in excess of 20%.

The residual properties of the binder are similar to that expected for emulsions containing about 2.5-10% residual crumb rubber. This provided torsional recovery up to 10% and viscosity increase and is indicative of the recovery method and the digestion of the rubber into the asphalt due to the application of heat. Results with an additive prepared as set out below were as follows:

| Emulsion Type | % Additive | Torsional Recovery | Pen 25C | Viscosity p 60C | After RTFOT Viscosity |
|---|---|---|---|---|---|
| CRS-2 | 0 | 0 | 121 | 764 | 1219 |
| | 10 | 3 | 181 | 1377 | 1377 |
| | 15 | 5 | 195 | | |
| | 20 | 9 | 210 | | |
| CQS-1h | 0 | 60 | 60 | | |
| | 5 | 4 | 68 | | |

The increase in penetration is attributable to solvent retention.

The emulsions utilized in each of the last two tests were prepared by mixing the additive of the present invention with the emulsions listed following ISSA guidelines with mechanical stirring. A single rock, granite rock aromas, was chosen and the emulsion adjusted to give 5% by weight rubber level in the asphalt. Emulsion content was equalized as optimum for the asphalt design at about 8% bitumen or 13.5% emulsion on the type II rock. The additive was added at 5% residual and the other polymers were at 2.5% for the latex and 3% for the SBS. The additive was 3% latex with the rubber added. Mix time was changed by the addition of rubber and retarder levels compared to asphalt emulsion from 0.25 to about 1%.

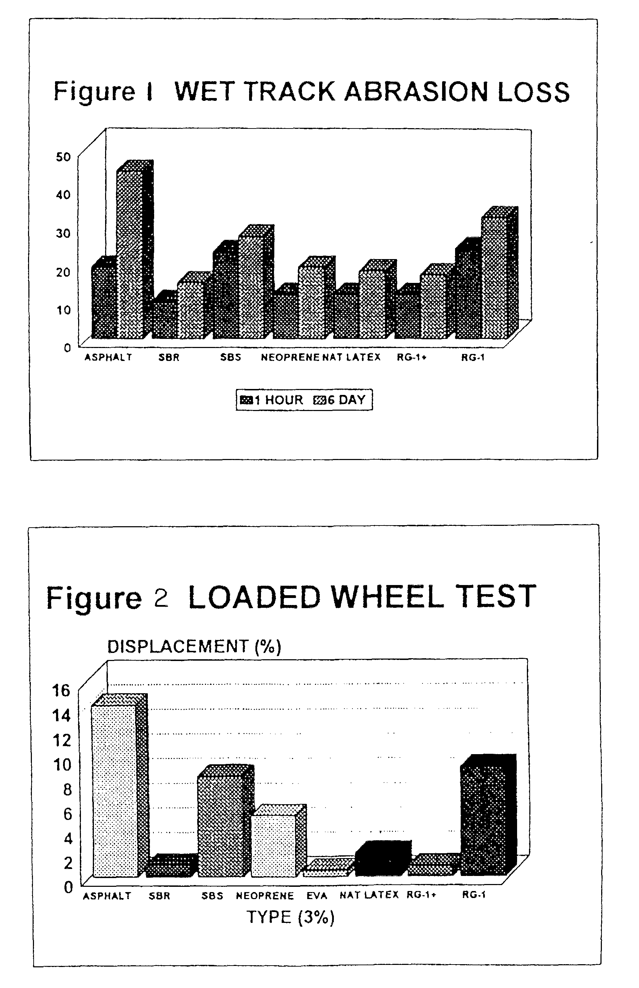

When wet track tested using standard industry test methods, the emulsion including the additive of the present invention showed improved resistance to stone loss. Consistent with the increase in viscosity shown in the data set out above, emulsions containing an additive which included latex showed even better results. The results are set out in Fig. 1; in Fig. 1 and each of Figs. 1-6, the emulsions modified by addition of the additive of the present invention are identified by the figure legend "RG-1."

Similar results were obtained when emulsions with and without the additive of the present invention were tested for resistance to deformation, again in accordance with a standard industry test method, referred to as the loaded wheel test. As was the case in resistance to stone loss, when the additive included latex, the results were further improved. The results of these tests are shown in Fig. 2.

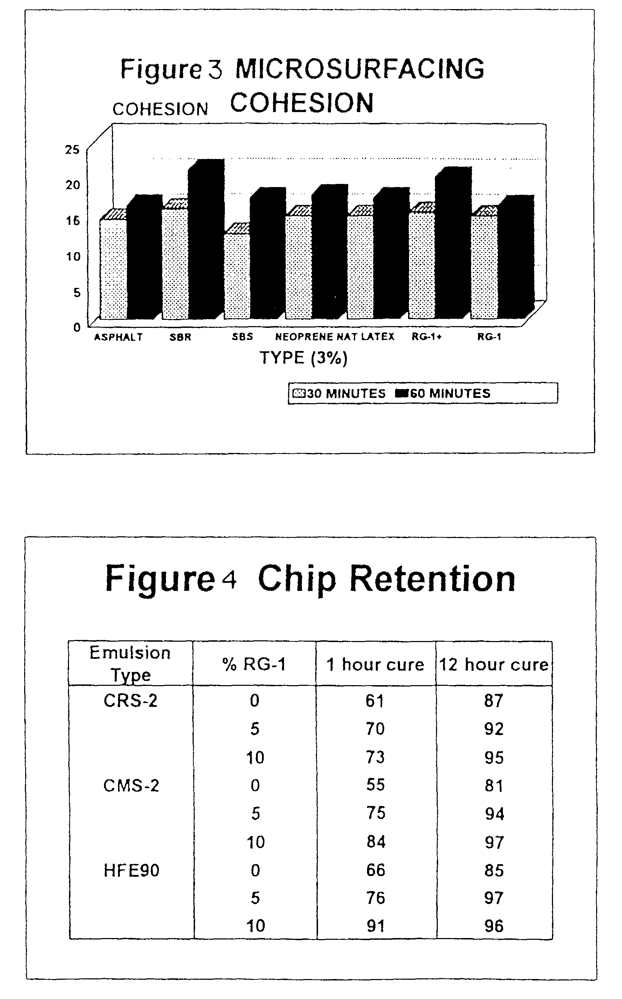

Likewise, set time was not compromised by addition of crumb rubber to the asphalt in the additive of the present invention. Further, when polymer was added to the additive for addition to the emulsion, the set time was improved. These results are shown in Fig. 3.

Additional testing was conducted to compare the effect of using other polymers on stone retention (the same test as was used to obtain the date presented in Fig. 1). Figs. 4 and 5 show the results, and it is evident that the addition of crumb rubber by the method of the present invention had a significant effect on stone retention that was superior even to emulsion modified with latex. The combination of latex with the additive of the present invention provided even better performance.

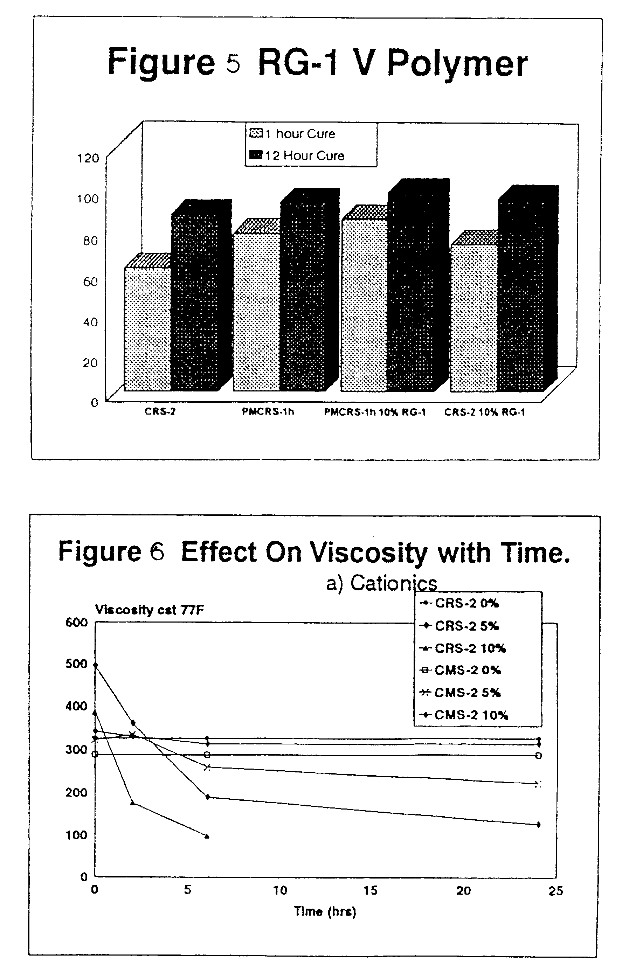

The viscosity increase of high float emulsions was increased when modified with the additive of the present invention and the effect was concentration dependent. The viscosity of cationic emulsions was not significantly affected and fell with time as shown in Fig. 6; the decrease was greater as the addition rate was increased. Emulsions already modified with latex showed similar results, indicating once again the advantage of mixing the additive of the present invention into the emulsion post-mix, e.g., on site, in accordance with the present method.

The crumb rubber asphalt modified emulsion utilized in the tests for which this data is reported consisted of equal parts by weight of a solvent and crumb rubber. The total parts by weight of these two ingredients comprised 100% of a base for calculating the quantities of the remainder of the formula which included an emulsifier, anti-stripping agent, binders, and color.

The solvent is an aliphatic solvent, more particularly, an alkane, olefin, or mix thereof, and in one embodiment SHELL SOL 340HT, a complex combination of predominately C9 and C12 hydrocarbons available from Shell Oil Co. is utilized. This solvent tends to dissolve natural rubber reclaimed from discarded vehicle tires and swell and soften reclaimed vulcanized tire crumb rubber. However, other solvents have been utilized with essentially similar results, including EXXON 3641 and 2024, EXXON naptha 1520, EXXON VARSOL 1 or 18 and any other napthas.

The proportion of solvent utilized varies depending upon the size of the crumb rubber particles and the particular emulsion with which the additive is to be utilized. The solvent is believed to be either participate in cross-linking reaction or to partially dissolve the rubber particles (and/or the latex or synthetic rubber(s) which may also be added) in the emulsion, and it is believed that this result is an important aspect of the superior performance of asphalt emulsions which are modified in accordance with the present invention. Generally, proportions of between 30 and 70% are utilized, however, best results are usually achieved with proportions of between about 40 and about 60%.

The rubber is natural rubber and vulcanized crumb rubber particles, 20-50 mesh. obtained from discarded vehicle tires. Although the size of the particles is preferably 20-50 mesh (0.84 - 0.297 mm), a range of particle sizes from about 20 to about 100 can be utilized to advantage in connection with the additive of the present invention. The proportion of rubber particles added ranges from 30 to 70%, depending upon particle size and the particular emulsion with which the additive is to be utilized. Generally, proportions of between 40 and 60% are utilized, however, best results are usually achieved with proportions of about 50%.

It is preferred that the quantity of water used is generally 30-40% of the base weight. It will be recognized by those skilled in the art who have the benefit of this disclosure that the quantity of water may be varied in accordance with the particle size of the crumb rubber and the proportion of solvent utilized. Depending upon these factors, satisfactory results are achieved when water is utilized in a range of from 25 to 45% of the base weight.

Many emulsifiers are known in the art for use in connection with asphalt mixes. The additive of the present invention utilizes many such emulsifying agents. regardless of whether they are anionic, cationic, or nonionic, and may be any grade, including RS, MS, SS, and QS. For instance, anionic emulsifiers such as petroleum sulfonates or sulfates. soaps such as alkyl metal salts of fatty acids, mixtures of acids from animal or vegetable oils, and the emulsifiers listed in, for instance, U.S. Patent Nos. 3,635,863, 4,018,730, 4,137,204, 4,282,037 and 4,548,735. Nonionic emulsifiers which may be used to advantage in connection with the additive of the present invention include long chain polyoxyethylene or polyoxypropylene groups in catty acids, alcohols, amides, or amines, again as described in U.S. Patent No. 4,282.037. Cationic emulsifiers such as diamines, amidoamines, imidazolines, and quaternary amines, and the mixture of imidazoline and quaternary diamine (TYFOCAT-R and INDULIN, respectively) described in U.S. Patent Nu. 4,137,204. are also suitable for use in connection with the additive of the present invention. Preferred emulsifiers are nonionic emulsifiers such as an ethoxylated nonylphenol or ionic emulsifiers such as a lignin sulfonate such as the emulsifier available under the trademark INDULIN. Hydrochloric acid or caustic soda may also be added to cationic or anionic emulsifiers, respectively, so that such emulsifiers may be used to greater advantage. Particularly preferred emulsifiers arc those listed below.

The proportion of emulsifier utilized varies depending upon the particle size of the crumb rubber and the particular emulsion with which the additive is to be utilized. Generally, proportions of between 0.5 and 5% are utilized, however, best results are usually achieved with proportions of between about 1 and about 2%. When the emulsifying agent utilized is a nonionic ethoxylated nonylphenol (CRISONAL 100/70, Christianson Chemicals, San Antonio, TX), the emulsifier comprises about 10-15% of the base weight of the additive (1.5-2.5%).

The additive of the present invention may optionally include a hinder, comprising from about 3 to about 10% of the base weight, in one embodiment, the binder is a clay mineral marketed under the trademark IMVITE IGB by Industrials Minerals Ventures, 2030 East Flamingo, Las Vegas, NV 89119. Other clays are also used to advantage, including such mineral clays as bentonites, bentones, hectorites, montmorillonite, and the clays listed in U.S. Patent No. 5,539,029. When such clays are utilized as a binder in the additive of the present invention, the binder is substituted for the lignosulfonic acid emulsifier. Best results are achieved when the clay is utilized in a proportion of from about 8 to about 15% of the base weight.

Other substances which may be included in the additive of the present invention are natural and synthetic rubbers. As set out above, the inclusion of approximately 2.5 to 3% (of the base weight) of latex provided synergistic results. Other synthetic and/or thermoplastic rubbers such as SBS and SBR can also be included in the additive in proportions ranging from about 0 to about 50% (of the base weight). Regardless of whether natural or other rubbers are added, satisfactory results are obtained in proportions ranging from 2 to 20%.

An anti-stripping agent is also utilized in the additive of the present invention. Anti-stripping agents such as quaternary amines and polyamines are utilized to advantage, and the anti-stripping agent generally comprises from about 0.5 to about 1.5% of the additive. Particularly preferred for use as the second binder is an aliphatic amine (polyamine) such as the polyamine available under the trademark NRD BOTTOMS (Nova Technologies, Houston, TX) in a proportion of from about 3% to about 10% of the base weight. This anti-stripping agent enhances adhesion of asphalt to a roadbed and retards asphalt bleeding through a chip seal wearing surface. Other anti-stripping agents appropriate for use in the additive of the present invention include the quaternary amine sold as UNICHEM 8162 (Casper, WY).

The additive of the present invention also comprises 1-4% of the base weight of atactic polypropylene powder (PPA) and 1-4% of the base weight of a selected color such as carbon black. The quantity of each of the principal ingredients, solvent and rubber, may be varied from 2 to 8 parts by weight to achieve the base weight. The quantity of the remaining ingredients of the formula may be 3 to 4 parts by weight of water; emulsifying agent 1.5 parts by weight; binder IMVITE IGB 1/2 part by weight; and the three remaining ingredients as follows: anti-stripping agent, atactic polypropylene powder and color, each 1/10 to 1/5 part by weight.

A preferred example of the emulsion consists of 100 pounds (45 kg) of solvent, 100 pounds (45 kg) of rubber, 60 pounds (27 kg) of water, 4 pounds (1,8 kg) of nonionic emulsifier, 5 pounds (2.25 kg) IMVITE IGB, and 2 pounds (0.9 kg) each of NRD BOTTOMS, atactic polypropylene powder, and black color for a total of 273 pounds (124 kg).

Comparison tests conducted with emulsions with and without the additive of the present invention indicate that the additive improves the performance characteristics of the emulsion residue. In one test, a sample of standard CRS-2 emulsion was obtained from Koch Asphalt (Austin, TX), modified by the addition of 10% rubber additive by weight of the distillation residue (6.87% of the total emulsion) and blended with a mechanical stirrer to insure complete distribution. The two emulsions were then tested to give the following results:

| Test | Koch CRS-2 | Koch CRS-2 With Additive |
|---|---|---|
| Residue by distillation (ASTM D244) % wt | 68.9 | 69.1 |

| Tests on Residue from Distillation: | | |
|---|---|---|
| • Penetration at 77°F (25°C), 100g, 5 sec (ASTM D5) | | |
| • Viscosity at 140°F (60°C), Poises(ASTM D2171) | 764 (76.4 kg/ms) | 850 (85 kg/ms) |

| Tests on Distillation Residue after Thin Film Oven Test (ASTM D1754): | | |
|---|---|---|
| • Penetration at 77°F (25°C), 100g, 5 sec (ASTM D5) | 89 | 96 |
| • Viscosity at 140°F (60°C), poises (ASTM D2171) | 1219 (121.9 kg/ms) | 1377 (137.7 kg/ms) |
| • Ductility at 77°F (25°C), 5 cm/min, cm (ASTM D113) | 69 | 49 |

These results show that the additive produces a softer residue at 77°F (25°C) than the unmodified emulsion, indicating that the modified emulsion performs as well or better than unmodified emulsion with regard in toughness and rock retention at elevated road temperatures and is more resistant to rock shelling or brittle failure at low roud temperatures.

Both emulsion residues were subjected to the thin film oven test to test the aging potential of the asphalt. The modified emulsion residue was softer at 77°F (25°C) than the unmodified emulsion after aging while viscosity was slightly higher. These results indicate that the modified emulsion has better film strength or toughness after aging at elevated road temperature than the unmodified emulsion while still being less brittle at lower temperatures. The ductility of the aged modified emulsion was lower than the unmodified emulsion, but the ductility strand at break was much thicker, indicating a tougher, higher film strength asphalt.

Additional tests measured the effect of different percentages of additive and different emulsions on chip retention and viscosity over time. The former was tested by modifiying the Vialet Procedure by curing the plates in the oven at 90°F (32.2°C) for one hour and/or for 12 hours before measuring chip retention. The results (expressed as % retained) were as follows:

| Emulsion Type | % Additive | 1 hour | 12 hour |
|---|---|---|---|
| CRS-2 | 0 | 61 | 87 |
| CRS-2 | 5 | 70 | 92 |
| CRS-2 | 10 | 73 | 95 |
| CMS-2 | 0 | 55 | 81 |
| CMS-2 | 5 | 75 | 94 |
| CMS-2 | 10 | 84 | 97 |
| HFE90 | 0 | 66 | 85 |
| HFE90 | 5 | 76 | 97 |
| HFE90 | 10 | 91 | 96 |

Viscosity testing over time was conducted in accordance with industry standard methods. The results were as follows:

| Emulsion Type | % Additive | 0 hours | 1 hour | 6 hours | 24 hours |
|---|---|---|---|---|---|
| CRS-2 | 0 | 325 | | | |
| CRS-2 | 5 | 347 | 322 | 313 | 200 |
| CRS-2 | 10 | 386 | 175 | 98 | |
| CMS-2 | 0 | 287 | | | |
| CMS-2 | 5 | 321 | 334 | 259 | 222 |
| CMS-2 | 10 | 495 | 360 | 189 | 126 |
| HFE90 | 0 | 221 | | | |
| HFE90 | 5 | 328 | 341 | 355 | 360 |
| HFE90 | 10 | 476 | 482 | 498 | 479 |

These results indicate that viscosity of high float emulsions is significantly increased by addition of additive and that the effect was concentration dependent. The viscosity of cationic emulsions was not significantly affected by addition of additive and fell signficantly with time. Emulsions already modified with latex exhibited the same trend. Although it has already been noted that the additive of the present invention is added to the emulsion post-mix, i.e., on site, surprisingly, these results with emulusions which have been modified with latex indicate that better performance of the asphalt if the additive is mixed with the emulsion on site, i.e., post-mix.

In the method of preparing an asphalt emulsion for use as a paving, roofing, or other coating material, the additive of the present invention, as noted above, has the very significant advantage of being mixed with the emulsion after milling. In other words, the additive is prepared in bulk by adding the emulsifier, atactic polypropylene powder, and anti-stripping agent to the solvent, mixing, and adding the carbon black or other color. Crumb rubber is then added and mixed, followed by the addition of the water. The additive is then transported to the site at which the asphalt is to be applied where the desired amount of additive is poured, pumped, or sucked into the distributor truck (preferably using the pump on the truck) and mixed with the commercially purchased asphalt emulsion, at ambient temperatures, using the internal circulation pump on the truck. The resulting mixture is then sprayed onto the road or other surface.

The additive is mixed with the emulsion in a wide range of proportions depending upon the use and nature of the surface to which the asphalt is to be applied. The proportions (by weight) vary from less than 5% up to as high as 20% based on the residual of the asphalt in the emulsion, but it is preferred that the additive comprise between about 5 and about 15% of the modified emulsion. The best results are generally obtained when the crumb rubber comprises approximately 5 to 10% of the asphalt by weight, and depending upon the asphalt emulsion, that preferred level of rubber content is obtained by mixing the additive of the present invention with the emulsion in proportions ranging from about 8 to about 12% additive.

Although described in conjunction with preferred embodiments, certain variations in those embodiment which are equivalents are intended to fall within the scope of the following claims.

The invention also relates to a method of adding crumb rubber to an asphalt emulsion and applying the asphalt emulsion to a surface comprising the steps of:
mixing an emulsifier, atactic polypropylene powder, and an anti-stripping agent in all aliphatic solvent and water to form an additive comprised of 3 to 7 parts each of solvent and crumb rubber, about 1.5 parts of emulsifying agent; and less than 1 part each of atactic polypropylene powder and anti-stripping agent;
adding the additive to an asphalt emulsion at ambient temperature and in a proportion so that the additive comprises from 2 to 20% of the asphalt emulsion and mixing; and
spraying the asphalt emulsion onto a surface.

Another aspect of the invention relates to an additive for use in modifying an asphalt emulsion at ambient temperature comprising:
equal parts of an aliphatic solvent and crumb runner, the aliphatic solvent and the crumb rubber each comprising 3 to 7 parts by weight of the additive;
0.5 to 5 parts by weight of an emulsifier;
2.5 to 4.5 parts by weight of water; and
0.3 to 1.5 parts by weight of an anti-stripping agent.

## Claims

1. A method of adding crumb rubber to an asphalt emulsion and applying the asphalt emulsion to a surface comprising the steps of:
mixing an emulsifier, atactic polypropylene powder, and an anti-stripping agent in an aliphatic solvent:
adding crumb rubber to the mix of emulsifier, atactic polypropylene powder and anti-stripping agent and mixing;
adding water to mixed emulsifier, atactic polypropylene powder, and anti-stripping agent to form an additive;
mixing the additive with an asphalt emulsion at ambient temperature; and
spraying the mixture of additive and asphalt emulsion onto a surface.

2. The method according to claim 1 in which the aliphatic solvent is a naptha.

3. The method according to claim 2 in which the aliphatic solvent comprises 30 to 70% of the mix of solvent, crumb rubber, emulsifier, atactic polypropylene powder and anti-stripping agent.

4. The method according to claim 1 in which the crumb rubber comprises reclaimed natural and vulcanized crumb rubber.

5. The method according to claim 4 wherein the crumb rubber comprises 30 to 70% of the mix of solvent, crumb rubber, emulsifier, atactic polypropylene powder, and anti-stripping agent.

6. The method according to claim 1 in which the emulsifier is a non-ionic ethoxylated nonylphenol.

7. The method of claim 4 in which the emulsifier additionally comprises a lignosulfonic acid.

8. The method according to claim 1 in which the anti-stripping agent is an aliphatic amine.

9. The method according to claim 1 wherein the particle size of the crumb rubber is 20-50 mesh (0.84 - 0.297 mm).

10. A method of adding crumb rubber to an asphalt emulsion and applying the asphalt emulsion to a surface comprising the steps of:
admixing an emulsifying agent, atactic polypropylene powder, and an anti-stripping agent in an aliphatic solvent and water to form an additive comprised of 3 to 7 parts each of solvent and crumb rubber, 1.5 parts of emulsifying agent; and less than 1 part each of atactic polypropylene powder and anti-stripping agent;
adding the additive to an asphalt emulsion at ambient temperarture and in a proportion so that the additive comprises from 2 to 20% of the asphalt emulsion and mixing; and
spraying the asphalt emulsion onto a surface.

11. The method according to claim 10 in which the aliphatic solvent is naptha.

12. The method according to claim 10 in which the crumb rubber comprises reclaimed natural and vulcanized crumb rubber.

13. The method according to claim 10 in which the emulsifier is a non ionic ethoxylated nonylphenol.

14. The method of claim 13 in which the emulsifier additionally comprises a lignosulfonic acid.

15. The method according to claim 10 in which the anti-stripping agent is an aliphatic amine.

16. The method according to claim 10 wherein the particle size of the crumb rubber is 20-50 mesh (0.84 - 0.297 mm).

17. The method according in any one of claims 10, 11, 12, or 16 in which the additive comprises from 8 to 15% of the asphalt emulsion.

18. An additive for use in modifying an asphalt emulsion at ambient temperature comprising:
equal parts of an aliphatic solvent and crumb rubber, the aliphatic solvent and the crumb rubber each comprising 3 to 7 parts by weight of the additive;
0.5 to 5 parts by weight of an emulsifier;
2.5 to 4.5 parts by weight of water; and
0.3 to 1.5 parts by weight of an anti-stripping agent.

19. The additive of claim 18 additionally comprising from 2 to 20% rubber.

20. The additive of claim 18 additionally comprising from 1 to 4% atactic polypropylene.

21. The additive of claim 18 wherein the emulsifier is a cationic, anionic, or nonionic emulsifier.

## Patentansprüche

1. Ein Verfahren zum Zufügen von Krümelgummi zu einer Asphaltemulsion und zum Aufbringen der Asphaltemulsion auf eine Oberfläche, welches die Schritte umfaßt:
Mischen eines Emulgators, eines ataktischen Polypropylenpulvers und eines Anti-Abziehmittels in einem aliphatischen Lösungsmittel;
Zufügen von Krümelgummi zu der Mischung aus Emulgator, ataktischem Polypropylenpulver und Anti-Abziehmittel und mischen;
Zufügen von Wasser zum gemischten Emulgator, ataktischen Polypropylenpulver und Anti-Abziehmittel, um ein Additiv zu bilden;
Mischen des Additivs mit einer Asphaltemulsion bei Umgebungstemperatur; und
Sprühen der Mischung aus Additiv und Asphaltemulsion auf eine Oberfläche.

2. Das Verfahren nach Anspruch 1, bei welchem das aliphatische Lösungsmittel ein Naphtha ist.

3. Das Verfahren nach Anspruch 2, bei welchem das aliphatische Lösungsmittel 30 bis 70 % der Mischung aus Lösungsmittel, Krümelgummi, Emulgator, ataktischem Polypropylenpulver und Anti-Abziehmittel umfaßt.

4. Das Verfahren nach Anspruch 1, bei welchem der Krümelgummi wiedergewonnenen Natur- und vulkanisierten Krümelgummi umfaßt.

5. Das Verfahren nach Anspruch 4, wobei der Krümelgummi 30 bis 70 % der Mischung aus Lösungsmittel, Krümelgummi, Emulgator, ataktischem Polypropylenpulver und Anti-Abziehmittel umfaßt.

6. Das Verfahren nach Anspruch 1, bei welchem der Emulgator ein nicht-ionisches ethoxyliertes Nonylphenol ist.

7. Das Verfahren nach Anspruch 4, bei welchem der Emulgator zusätzlich eine Lignosulfonsäure umfaßt.

8. Das Verfahren nach Anspruch 1, bei welchem das Anti-Abziehmittel ein aliphatisches Amin ist.

9. Das Verfahren nach Anspruch 1, wobei die Teilchengröße des Krümelgummis 0,84 - 0,297mm (20 - 50 Mesh) ist.

10. Ein Verfahren zum Zufügen von Krümelgummi zu einer Asphaltemulsion und zum Aufbringen der Asphaltemulsion auf eine Oberfläche, welches die Schritte umfaßt:
Beimischen eines Emulgators, eines ataktischen Polypropylenpulvers und eines Anti-Abziehmittels in einem aliphatischen Lösungsmittel und Wasser, um ein Additiv zu bilden, welches aus jeweils 3 bis 7 Teilen Lösungsmittel und Krümelgummi, 1,5 Teilen Emulgator besteht; und aus jeweils weniger als 1 Teil ataktischem Polypropylenpulver und Anti-Abziehmittel;
Zufügen des Additivs zu einer Asphaltemulsion bei Umgebungstemperatur und in einem Verhältnis, so daß das Additiv von 2 bis 20 % der Asphaltemulsion umfaßt, und mischen; und
Sprühen der Asphaltemulsion auf eine Oberfläche.

11. Das Verfahren nach Anspruch 10, bei welchem das aliphatische Lösungsmittel Naphtha ist.

12. Das Verfahren nach Anspruch 10, bei welchem der Krümelgummi wiedergewonnenen Natur- und vulkanisierten Krümelgummi umfaßt.

13. Das Vefahren nach Anspruch 10, bei welchem der Emulgator ein nicht-ionisches ethoxyliertes Nonylphenol ist.

14. Das Verfahren nach Anspruch 13, bei welchem der Emulgator zusätzlich eine Lignosulfonsäure umfaßt.

15. Das Verfahren nach Anspruch 10, bei welchem das Anti-Abziehmittel ein aliphatisches Amin ist.

16. Das Verfahren nach Anspruch 10, wobei die Teilchengröße des Krümelgummis 0,84 - 0,297 mm (20 - 50 Mesh) ist.

17. Das Verfahren nach einem der Ansprüche 10, 11, 12 oder 16, bei welchem das Additiv von 8 bis 15 % der Asphaltemulsion umfaßt.

18. Ein Additiv zur Verwendung zur Modifizierung einer Asphaltemulsion bei Umgebungstemperatur, welches umfaßt:
gleiche Teile eines aliphatischen Lösungsmittels und Krümelgummis, wobei das aliphatische Lösungsmittel und der Krümelgummi jeweils 3 bis 7 Gewichtsteile des Additivs umfassen;
0,5 bis 5 Gewichtsteile eines Emulgators;
2,5 bis 4,5 Gewichtsteile Wasser; und
0.3 bis 1,5 Gewichtsteile eines Anti-Abziehmittels.

19. Das Additiv nach Anspruch 18, welches zusätzlich von 2 bis 20 % Gummi umfaßt.

20. Das Additiv nach Anspruch 18, welches zusätzlich von 1 bis 4 % ataktisches Polypropylen umfaßt.

21. Das Additiv nach Anspruch 18, wobei der Emulgator ein kationischer, anionischer oder nicht-ionischer Emulgator ist.

## Revendications

1. Procédé consistant à ajouter du caoutchouc grumeleux à une émulsion bitumineuse et à appliquer l'émulsion bitumineuse à une surface, comprenant les étapes suivantes :
mélanger un émulsifiant, soit une poudre de polypropylène atactique, et un agent activant dans un solvant aliphatique ;
ajouter du caoutchouc grumeleux au mélange d'émulsifiant, soit une poudre de polypropylène atactique, et un agent activant et mélanger ;
ajouter de l'eau à l'émulsifiant, soit une poudre de polypropylène atactique, mélangé, et un agent activant pour former un additif ;
mélanger l'additif avec une émulsion bitumineuse à la température ambiante ; et
pulvériser le mélange d'additif et d'émulsion bitumineuse sur une surface.

2. Procédé selon la revendication 1, dans lequel le solvant aliphatique est un naphta.

3. Procédé selon la revendication 2, dans lequel le solvant aliphatique comprend 30 à 70 % du mélange de solvant, caoutchouc grumeleux, émulsifiant, soit une poudre de polypropylène atactique, et agent activant.

4. Procédé selon la revendication 1, dans lequel le caoutchouc grumeleux comprend du caoutchouc naturel régénéré et du caoutchouc grumeleux vulcanisé.

5. Procédé selon la revendication 4, dans lequel le caoutchouc grumeleux comprend 30 à 70 % du mélange de solvant, caoutchouc grumeleux, émulsifiant, soit une poudre de polypropylène atactique, et agent activant.

6. Procédé selon la revendication 1, dans lequel l'émulsifiant est un nonylphénol éthoxylé non ionique.

7. Procédé selon la revendication 4, dans lequel l'émulsifiant comprend, en outre, un acide lignosulfonique.

8. Procédé selon la revendication 1, dans lequel l'agent activant est une amine aliphatique.

9. Procédé selon la revendication 1, dans lequel la granulométrie du caoutchouc grumeleux varie entre 20 et 50 mesh (0,84 et 0,297 mm).

10. Procédé consistant à ajouter du caoutchouc grumeleux à une émulsion bitumineuse et à appliquer l'émulsion bitumineuse à une surface, comprenant les étapes suivantes :
mélanger un agent émulsifiant, soit une poudre de polypropylène atactique, et un agent activant dans un solvant aliphatique et de l'eau pour former un additif composé de 3 à 7 parties chacun de solvant et de caoutchouc grumeleux, 1,5 parties d'agent émulsifiant, et moins d'une partie chacun d'une poudre de polypropylène atactique et d'agent activant ; et
ajouter l'additif à une émulsion bitumineuse à la température ambiante et dans une proportion telle que l'additif comprend 2 à 20 % de l'émulsion bitumineuse et mélanger ; et
pulvériser l'émulsion bitumineuse sur une surface.

11. Procédé selon la revendication 10, dans lequel le solvant aliphatique est un naphta.

12. Procédé selon la revendication 10, dans lequel le caoutchouc grumeleux comprend du caoutchouc naturel régénéré et du caoutchouc grumeleux vulcanisé.

13. Procédé selon la revendication 10, dans lequel l'émulsifiant est un nonylphénol éthoxylé non ionique.

14. Procédé selon la revendication 13, dans lequel l'émulsifiant comprend, en outre, un acide lignosulfonique.

15. Procédé selon la revendication 10, dans lequel l'agent activant est une amine aliphatique.

16. Procédé selon la revendication 10, dans lequel la granulométrie du caoutchouc grumeleux varie entre 20 et 50 mesh (0,84 et 0,297 mm).

17. Procédé selon l'une quelconque des revendications 10, 11, 12 ou 16, dans lequel l'additif comprend 8 à 15 % de l'émulsion bitumineuse.

18. Additif destiné à une utilisation dans le but de modifier une émulsion bitumineuse, à la température ambiante, comprenant :
des parties égales de solvant aliphatique et de caoutchouc grumeleux, le solvant aliphatique et le caoutchouc grumeleux comprenant chacun 3 à 7 parties en poids de l'additif ;
0,5 à 5 parties en poids d'un émulsifiant ;
2,5 à 4,5 parties en poids d'eau ; et
0,3 à 1,5 parties en poids d'un agent activant.

19. Additif selon la revendication 18, comprenant, en outre, 2 à 20 % de caoutchouc.

20. Additif selon la revendication 18, comprenant, en outre, 1 à 4 % de polypropylène atactique.

21. Additif selon la revendication 18, dans lequel l'émulsifiant est un émulsifiant cationique, anionique ou non ionique.
